(19) **Europäisches Patentamt**
**European Patent Office**
**Office européen des brevets**

(11) **EP 3 361 247 A1**

(12) **EUROPEAN PATENT APPLICATION**
published in accordance with Art. 153(4) EPC

(43) Date of publication:
**15.08.2018 Bulletin 2018/33**

(51) Int Cl.:
***G01N 29/04*** (2006.01)          ***G01N 29/24*** (2006.01)
***G01N 29/27*** (2006.01)

(21) Application number: **16853520.1**

(22) Date of filing: **03.10.2016**

(86) International application number:
**PCT/JP2016/079264**

(87) International publication number:
**WO 2017/061366 (13.04.2017 Gazette 2017/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **06.10.2015 JP 2015198399**

(71) Applicant: **NTN Corporation**
**Osaka-shi, Osaka 550-0003 (JP)**

(72) Inventors:
• **OOE, Hiroki**
**Kuwana-shi**
**Mie 511-8678 (JP)**
• **KAWASHIMA, Koichiro**
**Kuwana-shi**
**Mie 511-0835 (JP)**
• **FUJITA, Fumio**
**Tokyo 171-0033 (JP)**

(74) Representative: **Bockhorni & Kollegen**
**Elsenheimerstraße 49**
**80687 München (DE)**

(54) **NON-DESTRUCTIVE INSPECTION DEVICE AND METHOD FOR PRODUCING BEARING**

(57)    A nondestructive inspection apparatus (1) includes a focused ultrasonic probe (4) which transmits burst waves to a surface of a spherical body (21) in water, a signal output portion (12) which outputs the burst waves to the focused ultrasonic probe (4), a probe position changing mechanism (6) which rotates the spherical body (21) arranged in water so as to change a position at which the burst waves from the focused ultrasonic probe (4) are incident, and a signal detection portion (13) which detects a harmonic waveform generated when a closed crack or a metal inclusion oscillates by waves excited in the spherical body (21) by the burst waves through mode conversion. A closed crack or a metal inclusion in the vicinity of a surface of the spherical body can thus be detected and imaged as necessary.

FIG.1

EP 3 361 247 A1

## Description

TECHNICAL FIELD

This invention relates to a nondestructive inspection apparatus and particularly to a nondestructive inspection apparatus capable of inspecting a spherical body with ultrasound in water.

BACKGROUND ART

Nondestructive inspection has conventionally been conducted by emitting ultrasound having an infinitesimal amplitude to a defect of a millimeter order having a volume not less than a certain level, such as an open crack or a large non-metal inclusion in iron steel, and by measuring intensity of reflection waves or intensity of back scattered waves from an internal defect with an acoustic impedance difference. Such an ultrasonic inspection method is described in a publication such as NPD 1 "Cho-onpa Tanshouhou."

As described in NPD 1, the conventional ultrasonic inspection method basically evaluates a size and a position of a defect based on intensity and a time of reception of reflection waves in the same frequency domain as incident waves.

Japanese Patent Laying-Open No. 2006-64574 (PTD 1) describes a method of detecting and imaging an internal defect with longitudinal or transverse harmonics excited by an internal defect in a material by emission of longitudinal ultrasound having a large amplitude to a material through water.

CITATION LIST

PATENT DOCUMENT

PTD 1: Japanese Patent Laying-Open No. 2006-64574

NON PATENT DOCUMENT

NPD 1: Edited by the 19th Steelmaking Committee, Japan Society for the Promotion of Science, "Cho-onpa Tanshouhou," the Nikkan Kogyo Shimbun, Ltd., newly revised on January 10, 1979, 4th edition

SUMMARY OF INVENTION

TECHNICAL PROBLEM

Since a lifetime of a spherical body such as a ceramic ball included in a ball bearing is shortened due to a small closed crack or an inclusion located in the vicinity of a surface, identification and elimination of a ball including such a closed crack or an inclusion through nondestructive inspection is required.

An acoustic impedance difference of a closed crack having a length of approximately 100 μm or a nonmetal inclusion as large as that from a sound portion, however, is extremely small. Therefore, such a closed crack or an inclusion is not successfully identified by nondestructive inspection with the conventional ultrasound method. It is difficult in principle, for example, with the method described in NPD 1, to detect a defect small in acoustic impedance difference such as a small closed crack or a small inclusion which is partially in contact.

The method described in Japanese Patent Laying-Open No. 2006-64574 is not applicable to inspection of the entire spherical surface for a closed crack and a nonmetal inclusion located in the vicinity of a surface of a ball.

This invention was made to solve the problems above, and an object thereof is to provide a nondestructive inspection apparatus capable of inspection for a small closed crack and nonmetal inclusion in a spherical body.

SOLUTION TO PROBLEM

In summary, this invention is directed to a nondestructive inspection apparatus, the nondestructive inspection apparatus including an ultrasonic probe configured to transmit burst waves to a surface of a spherical body in water, a signal output portion configured to output the burst waves to the ultrasonic probe, a probe position changing mechanism configured to rotate the spherical body arranged in water so as to change an incident position of the burst waves on the spherical body, and a signal detection portion configured to detect a harmonic waveform generated when a closed crack or a metal inclusion oscillates by waves excited in the spherical body by the burst waves through mode conversion.

Preferably, the ultrasonic probe also serves as a reception probe.

Preferably, the ultrasonic probe includes a transmission probe and a reception probe, the reception probe being allocatable at a position different from a position where the transmission probe is located.

Preferably, the signal detection portion includes a filter configured to remove a fundamental wave component from a signal received by the ultrasonic probe and extract the harmonic waveform.

Preferably, the ultrasonic probe is fixed in water. The probe position changing mechanism is a mechanism configured to rotate the spherical body simultaneously in a first direction and a direction intersecting with the first direction such that the burst waves are incident on the entire surface of the spherical body. The probe position changing mechanism includes a first cone, a second cone, a pressing mechanism, and a varying portion.

The first cone is configured to rotate around a first rotation axis and has a conical surface in contact with the spherical body to be rotated at a first contact of the spherical body from a first direction along the first rotation axis. The second cone is configured to rotate around a second rotation axis in parallel to the first rotation axis and has a conical surface in contact at a second contact different from the first contact of the spherical body in the first direction. The pressing mechanism relatively presses the first cone and the second cone against the spherical body in the first direction. The varying portion varies a rotation speed of the second cone relatively to a rotation speed of the first cone.

Preferably, the nondestructive inspection apparatus further includes a storage portion configured to store the incident position of the burst waves on the spherical body and a result of detection by the signal detection portion in association with each other, the incident position being changed by the probe position changing mechanism, and an imaging portion configured to read the incident position and the detection result stored in the storage portion and create an image showing a position on the spherical body of the closed crack or the metal inclusion.

Preferably, the spherical body is a rolling element for a bearing made of a non-magnetic material or a magnetic material.

In another aspect, this invention is directed to a method of manufacturing a bearing, the method including an inspection step of inspecting the spherical body with the nondestructive inspection apparatus described above.

ADVANTAGEOUS EFFECTS OF INVENTION

According to the present invention, a defect which has been undetectable with a conventional ultrasonic method, such as a small closed crack located in the vicinity of a surface of a spherical body and a small inclusion small in acoustic impedance difference, can nondestructively be detected. Therefore, means for nondestructively inspecting soundness of a spherical body is established.

BRIEF DESCRIPTION OF DRAWINGS

Fig. 1 is a block diagram showing a basic construction of a nondestructive inspection apparatus 1 common to embodiments of the present invention.
Fig. 2 is a diagram for illustrating relation between non-linear stress-strain response and a harmonic.
Fig. 3 is a diagram showing exemplary excitation of a surface wave by mode conversion resulting from incidence at an oblique angle.
Fig. 4 is a diagram showing a form of measurement with a pitch-catch method with the use of a transmission probe and a reception probe.
Fig. 5 is a diagram showing a construction (a reference example) of a probe position changing mechanism.
Fig. 6 is a diagram showing a construction of a probe position changing mechanism in a first embodiment.
Fig. 7 is a side view of a probe position changing mechanism 6C according to a second embodiment.
Fig. 8 is a front view of probe position changing mechanism 6C according to the second embodiment.
Fig. 9 is a schematic diagram showing a shape of an eccentric member 104a in Fig. 8.
Fig. 10 is a schematic diagram for illustrating an operation of probe position changing mechanism 6C.
Fig. 11 is a diagram for illustrating a state of rotation of a rotated spherical body.
Fig. 12 is a flowchart for illustrating an inspection method according to the present embodiment.
Fig. 13 is a flowchart for illustrating a method of manufacturing a bearing according to the present embodiment.
Fig. 14 is a diagram showing one example of a bearing 140 manufactured with the manufacturing method according to the present embodiment.
Fig. 15 is a diagram showing exemplary visualization of a closed crack in a silicon nitride ball in horizontal plane scanning.
Fig. 16 is a diagram showing exemplary visualization of a metal inclusion in a silicon nitride ball in horizontal plane scanning.
Fig. 17 is a diagram showing exemplary visualization of a closed crack in a silicon nitride ball through rotation of a ball around a vertical axis.
Fig. 18 is a diagram showing exemplary visualization of a simulated defect (a Vickers indentation) in a silicon nitride ball in horizontal plane scanning.

DESCRIPTION OF EMBODIMENTS

An embodiment of the present invention will be described below with reference to the drawings. The same or corresponding elements in the drawings below have the same reference characters allotted and description thereof will not be repeated.

[Common Basic Construction]

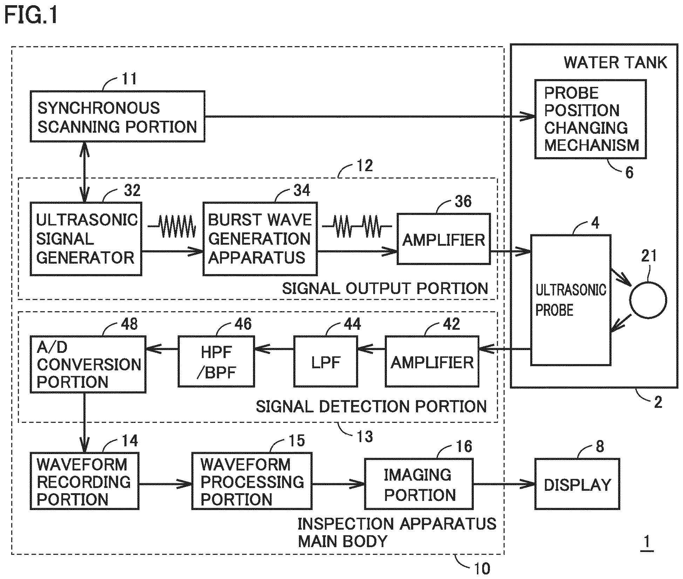

Fig. 1 is a block diagram showing a basic construction of a nondestructive inspection apparatus 1 common to embodiments of the present invention. Referring to Fig. 1, nondestructive inspection apparatus 1 includes an inspection apparatus main body 10, a focused ultrasonic probe 4, a probe position changing mechanism 6, and a display 8.

Focused ultrasonic probe 4 is located in water in a water tank 2 together with a spherical body 21 to be inspected. Spherical body 21 is a rolling element for a bearing made of a non-magnetic material or a magnetic material and it is a ceramic ball by way of example.

Inspection apparatus main body 10 includes a synchronous operation portion 11, a signal output portion 12, a signal detection portion 13, a waveform recording portion 14, a waveform processing portion 15, an imaging portion 16, and display 8.

Signal output portion 12 outputs burst waves to focused ultrasonic probe 4. Focused ultrasonic probe 4 transmits the burst waves to a surface of spherical body 21 in water. Probe position changing mechanism 6 rotates spherical body 21 arranged in water so as to change a position where burst waves from focused ultrasonic probe 4 are incident on the surface of spherical body 21. Signal detection portion 13 detects a harmonic waveform generated at the time when a closed crack or a metal inclusion oscillates by waves excited in spherical body 21 by the burst waves through mode conversion.

Signal output portion 12 includes an ultrasonic signal generator 32, a burst wave generation apparatus 34, and an amplifier 36. Ultrasonic signal generator 32 outputs an electrical signal corresponding to a frequency of ultrasound of a low amplitude. Burst wave generation apparatus 34 generates a sinusoidal signal having a necessary number of cycles upon receiving the electrical signal output from ultrasonic signal generator 32. Amplifier 36 receives the sinusoidal signal from burst wave generation apparatus 34 and amplifies the sinusoidal signal to a sinusoidal signal of a large amplitude having a necessary number of cycles, and excites focused ultrasonic probe 4. Focused ultrasonic probe 4 converts an electrical signal into ultrasonic undulation.

Generated ultrasonic undulation is focused in water and spherical body 21 and reaches an inspection area on the surface of spherical body 21. When a closed crack or a metal inclusion having non-linear stress-strain response characteristics is present in the inspection area, harmonics are excited in spherical body 21.

Focused ultrasonic probe 4 also serves as a reception probe and can receive harmonics. Harmonics are received by focused ultrasonic probe 4 through a path the same as a transmission path and converted to an electrical signal. Signal detection portion 13 receives the electrical signal from focused ultrasonic probe 4.

Signal detection portion 13 includes an amplifier 42, a low pass filter (LPF) 44, a high pass filter (HPF) or band pass filter (BPF) 46, and an A/D conversion portion 48.

In general, at least amplifier 42 and LPF 44 are included in the signal detection portion of an ultrasound measurement instrument. Signal detection portion 13 in the present embodiment includes HPF/BPF 46 and A/D conversion portion 48 in addition thereto. HPF/BPF 46 extracts only necessary harmonics to thereby facilitate processing in A/D conversion portion 48. For example, an amplitude of harmonics excited by a closed crack in ceramics is not higher than 1% of an amplitude of fundamental waves (an incident frequency). Therefore, when the fundamental waves and the harmonics are both subjected to 8-12 bit AD conversion, it is difficult to detect a harmonic component from data subjected to AD conversion. Therefore, AD conversion is performed after a fundamental wave component is removed through the high pass filter and only a signal in a harmonic band having a waveform small in amplitude is extracted. A/D conversion portion 48 outputs converted data to waveform recording portion 14.

Waveform recording portion 14 stores a position on spherical body 21 where burst waves are incident changed by probe position changing mechanism 6 and a result of detection by signal detection portion 13 in association with each other. By storing the position of incidence and the result of detection in association with each other, a distribution of defects can be imaged.

Waveform processing portion 15 finds a feature value such as a maximum amplitude, a time of rise of a waveform, and an envelope of a waveform recorded in waveform recording portion 14 through digital waveform processing.

Imaging portion 16 reads the position of incidence and the result of detection stored in waveform recording portion 14 and creates data for representation of an image showing a position on spherical body 21 of a closed crack or a metal inclusion. Display 8 shows a two-dimensional image on a screen in gray-scale gradation or in a colored tone when it receives the data created by imaging portion 16.

Waveform processing portion 15 or imaging portion 16 may be implemented by hardware or may be processed by software by using a personal computer.

[Measurement Principles]

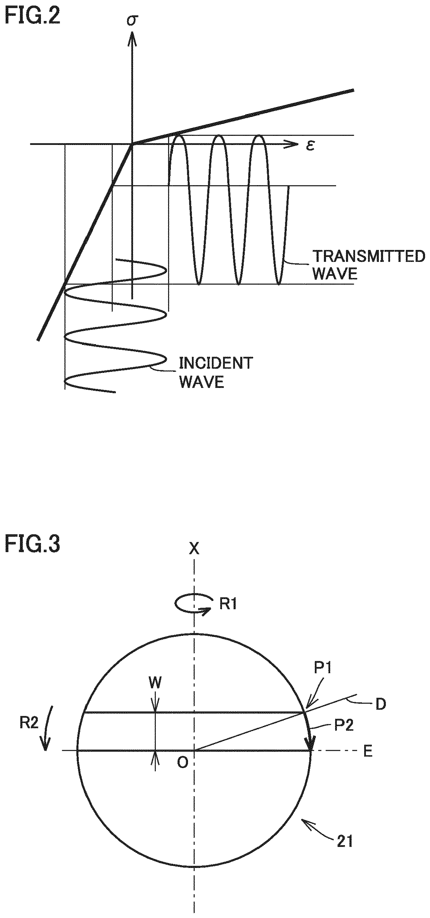

Fig. 2 is a diagram for illustrating relation between non-linear stress-strain response and a harmonic. Referring to Fig. 2, the abscissa represents strain $\varepsilon$ and the ordinate represents a stress $\sigma$. A region where a condition of $\sigma > 0$ is satisfied is denoted as a tensile side region and a region where a condition of $\sigma < 0$ is satisfied is denoted as a compressive side region. When a defect is present, relation between strain and stress is significantly different between above and below a boundary where a condition of $\sigma = 0$ is satisfied.

As shown in Fig. 2, stress-strain response at a surface of a closed crack or an interface between ceramics and a metal inclusion is in a form of a bent line smaller in slope on a tensile side than on a compressive side. Consequently, even though clear sinusoidal waves (incident waves) are incident, scattered waves (transmitted waves) at the interface exhibit significantly strained waveforms. By subjecting these waveforms to Fourier transform, harmonics at integral multiples of an incident frequency are exhibited.

When ultrasound of a large amplitude is incident, a high-frequency stress excited in a solid is expressed in an expression (1) in an example of longitudinal waves:

$$\sigma = \rho C V \qquad \dots (1)$$

where σ represents a vertical stress generated in an object to be inspected, ρ represents a density of the object to be inspected, C represents a sonic speed of longitudinal waves of a material, and V represents a particle velocity resulting from incident ultrasound. When ultrasound is incident on a ceramic ball, each point in a region of incidence oscillates at a velocity substantially in proportion to an incident voltage. A velocity of this oscillating point is referred to as a particle velocity. Strictly speaking, a particle velocity is different at each point, however, in the expression (1), V is represented by a highest particle velocity.

A stress excited at the time when longitudinal waves at a frequency of 20 MHz having an amplitude of 10 nanometers (nm) are incident on silicon nitride is approximately 40 MPa. When a stress oscillating at this high frequency is applied to a surface of a closed crack or an interface of a nonmetal inclusion, stress-strain response is significantly different between the tensile side and the compressive side as shown in Fig. 1. Therefore, transmitted waves resulting from passage of incident sinusoidal burst waves through an object to be inspected are strained to such a waveform that a peak portion on the tensile side is cut away.

When a strained waveform (transmitted waves) shown on the right side in Fig. 2 is subjected to fast Fourier transform (FFT), some high-order harmonics at frequencies at integral multiples of a frequency of incident waves appear. By plotting amplitudes of the harmonics with respect to positions of scanning by a probe or angles of rotation of the spherical body, a closed crack or a nonmetal inclusion can be visualized.

Since a dimension of a closed crack or a metal inclusion in the vicinity of a surface of the spherical body is smaller than a diameter of a focused ultrasonic beam, an area of scattering causing the strained waveform on the right in Fig. 2 is one severalth to one several tenth of a diameter of a focused ultrasonic beam. Since generation of high-order harmonics due to waveform strain is noticeable, an apparatus which images relation between intensity of harmonics and a position of irradiation with beams can be used to detect and visualize a closed crack or a nonmetal inclusion.

Fig. 3 is a diagram showing exemplary excitation of surface waves by mode conversion resulting from incidence at an oblique angle. Referring to Fig. 3, when ultrasound P1 is incident from water at an angle corresponding to a velocity of surface waves of ceramics in a cross-section along a meridian of a ball, surface waves P2 propagate along the meridian. In water, energy of the surface waves leak into water, and therefore an effective area of propagation of the surface waves is limited. When a closed crack or a metal inclusion is located in the effective propagation area, scattered waves are emitted therefrom. By setting the effective propagation area as an inspection area W and receiving harmonics of the scattered waves, presence of a closed crack or a metal inclusion in inspection area W can be detected.

Though an example in which focused ultrasonic probe 4 serves as both of a transmission probe and a reception probe is described with reference to Fig. 1, a two-probe pitch-catch method in which a transmission probe and a reception probe are individually provided may be employed.

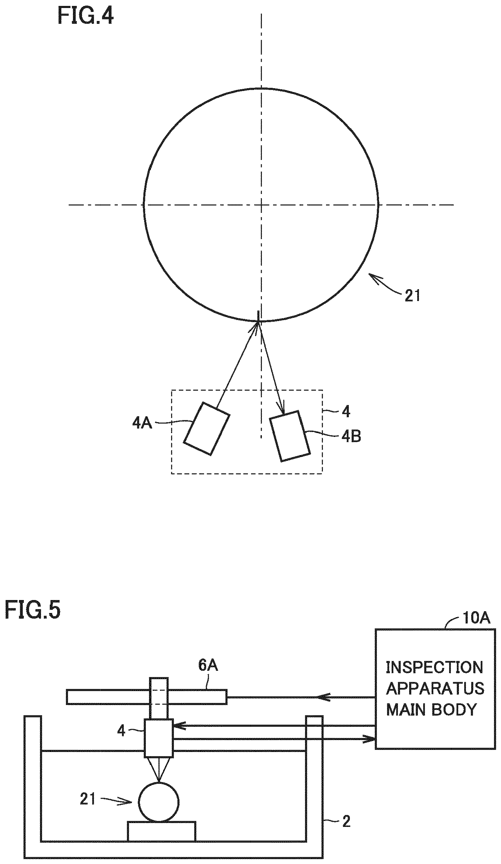

Fig. 4 is a diagram showing a form of measurement with a pitch-catch method with the use of a transmission probe and a reception probe. With the two-probe pitch-catch method, focused ultrasonic probe 4 includes a transmission probe 4A and a reception probe 4B which can be arranged at a position different from a position of transmission probe 4A. In such a case, reception probe 4B can be moved to a position where reception sensitivity is high.

When scattered waves from a closed crack are received with one probe, only ultrasound scattered in a direction of the probe from the crack can be received. In contrast, by using probes individually for transmission and reception and adjusting orientations thereof with respect to a closed crack, stronger scattered waves can be received than in an example in which a probe serves for both of transmission and reception.

With the two-probe pitch-catch method, a degree of freedom in arrangement of reception probe 4B is high. Therefore, a distance of propagation of received waves through water can be shorter and attenuation of received waves associated with propagation through water is lessened. Therefore, weak harmonics from a closed crack in a surface of a ball can be received at higher sensitivity than in transmission and reception of ultrasound by a single probe.

[Exemplary Construction of Probe Position Changing Mechanism]

(Reference Example)

Fig. 5 is a diagram showing a construction (a reference example) of a probe position changing mechanism. A probe position changing mechanism 6A is shown in an example in Fig. 5. Probe position changing mechanism 6A is a scanning mechanism which moves focused ultrasonic probe 4 relatively to spherical body 21 in a horizontal plane. In the example shown in Fig. 5, synchronous operation portion 11 in Fig. 1 drives probe position changing mechanism 6A.

Burst wave signals having a certain number of repetitions are output from signal output portion 12 at a certain interval in synchronization with synchronous operation portion 11. Ultrasonic probe 4 converts the burst wave signals (electrical signals) into ultrasonic undulation.

Generated ultrasonic undulation is focused in water and a ceramic ball and reaches an inspection area of the ceramic ball. A closed crack or a metal inclusion in the vicinity of a surface of the ceramic ball is detected by using mode-converted waves (longitudinal waves, transverse waves, and surface waves) generated by ultrasound undulation incident on the ceramic ball through water.

When a closed crack or a metal inclusion is present in the inspection area, harmonics are excited for the reason explained with reference to Fig. 2. The harmonics are converted to electrical signals by ultrasonic probe 4, imaged through processing in signal detection portion 13, waveform recording portion 14, waveform processing portion 15, and imaging portion 16 in Fig. 1, and shown two-dimensionally on the screen of display 8 in gray-scale gradation or in a colored tone.

(First Embodiment)

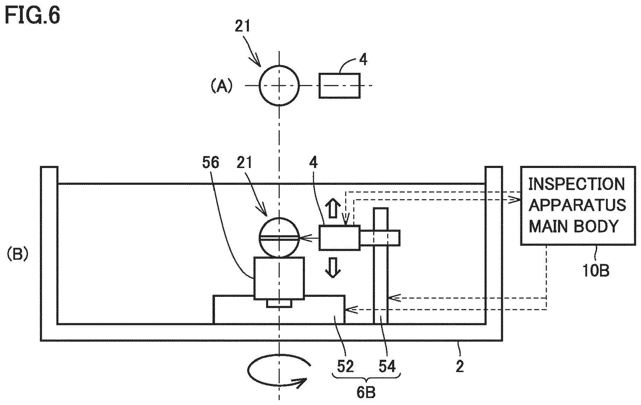

Fig. 6 is a diagram showing a construction of a probe position changing mechanism in a first embodiment. Fig. 6(a) is a diagram of spherical body 21 viewed from above and Fig. 6(b) is a diagram of spherical body 21 in water viewed from a side. In an example shown in Fig. 6, a probe position changing mechanism 6B is shown. Probe position changing mechanism 6B includes a turntable 52 which rotates spherical body 21, a scanning mechanism 54 which can change a vertical position of ultrasonic probe 4, and a holder 56 which holds spherical body 21 on turntable 52. Spherical body 21 is held on turntable 52 by holder 56. In the example shown in Fig. 6, synchronous operation portion 11 in Fig. 1 drives scanning mechanism 54 and turntable 52.

Instead of the construction in which scanning with an ultrasonic probe is performed in the horizontal plane shown in Fig. 5, in Fig. 6, spherical body 21 is rotated around a vertical axis by turntable 52 and ultrasonic probe 4 is vertically moved by one pitch by scanning mechanism 54 each time of rotation.

Signal output portion 12 sends burst wave signals having a certain number of repetitions to ultrasonic probe 4 at a certain interval in synchronization with an angle of rotation of turntable 52 from synchronous operation portion 11 in Fig. 1. Ultrasonic probe 4 converts electrical signals into ultrasonic undulation. Generated ultrasound is focused in water and reaches inspection area W of the ceramic ball shown in Fig. 3.

When a closed crack or a metal inclusion which has non-linear stress-strain response characteristics shown in Fig. 2 is present in inspection area W, harmonics are excited. The harmonics are received by ultrasonic probe 4 through a path the same as a transmission path and converted to electrical signals.

The electrical signals are imaged through processing in signal detection portion 13, waveform recording portion 14, waveform processing portion 15, and imaging portion 16 in Fig. 1 and two-dimensionally shown on the screen of display 8 in gray-scale gradation or in a colored tone.

Though an example in which ultrasonic probe 4 is vertically moved is shown, ultrasonic probe 4 may be fixed and holder 56 may change a position of holding.

Though spherical body 21 is held on turntable 52 by holder 56, holder 56 may be constructed to be able to rotate spherical body 21 on turntable 52 in a direction along a circumference resulting from cutting spherical body 21 along a vertical surface (R2 in Fig. 3). In this case, synchronous operation portion 11 in Fig. 1 drives holder 56 and turntable 52.

As shown in Fig. 3, an area which can be inspected in one rotation R1 around a vertical axis X of a ball is limited to a region in inspection area W having a certain width in the vicinity of the equator of the ball. Therefore, as shown with an arrow R2 in Fig. 3, inspection is conducted by rotating the ball only by a certain angle around an axis perpendicular to a sheet surface, again based on rotation R1 around vertical axis X of the ball. The entire spherical surface can be inspected by repeating this process a necessary number of times.

(Second Embodiment)

Another probe position changing mechanism is employed as a method of inspecting the entire surface of a ball in a second embodiment. The probe position changing mechanism implements a rotation mechanism which rotates spherical body 21 to allow thorough inspection of the entire surface of spherical body 21 not based on a difference in phase in rotation of a portion of a rotation roller in direct contact with a spherical body but by using an eccentric gear.

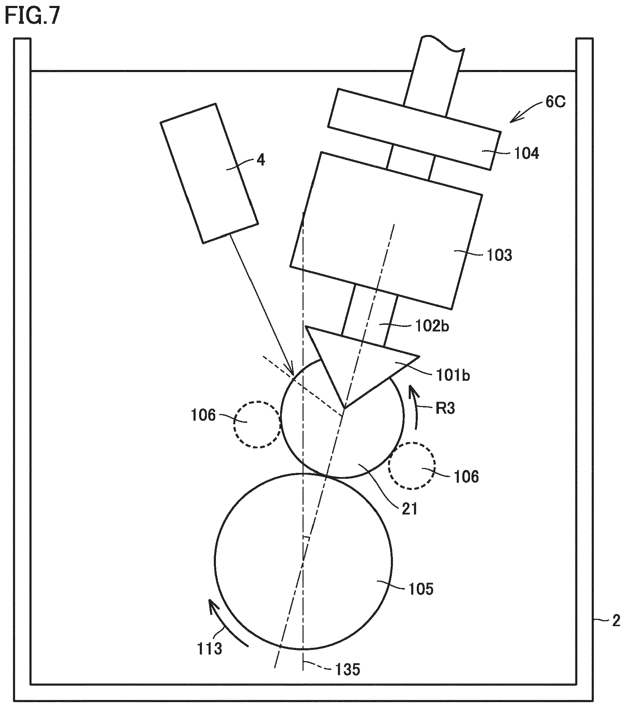

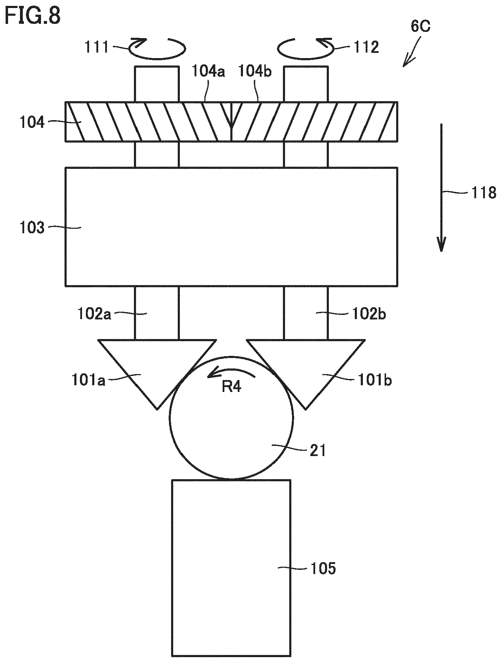

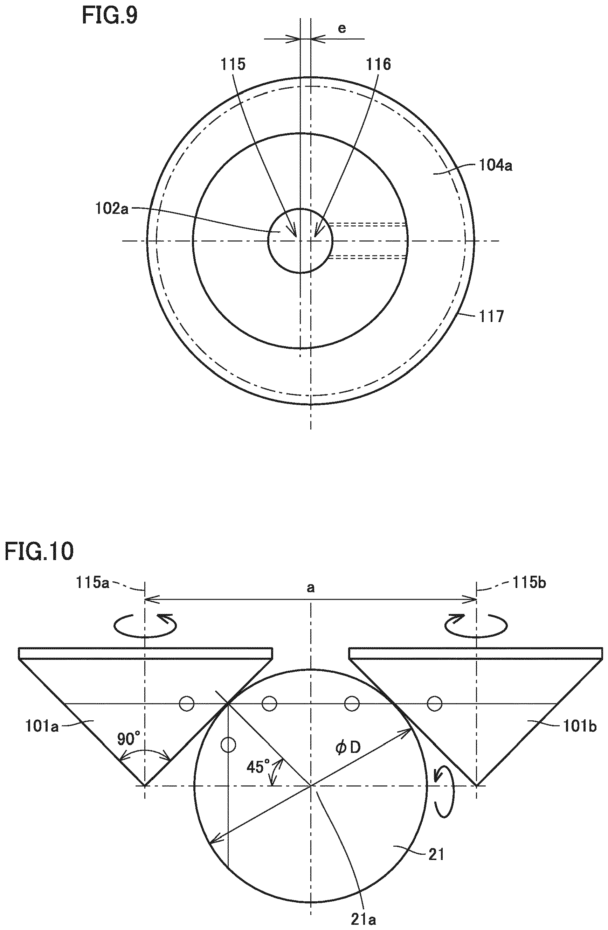

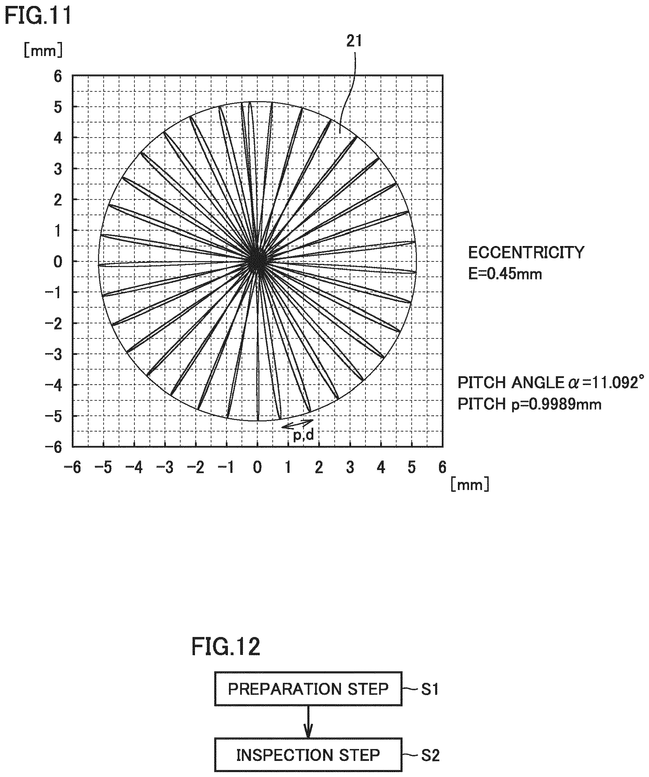

Fig. 7 is a side view of a probe position changing mechanism 6C according to the second embodiment. Fig. 8 is a front view of probe position changing mechanism 6C according to the second embodiment. Fig. 9 is a schematic diagram showing a shape of an eccentric member 104a in Fig. 8. Fig. 10 is a schematic diagram for illustrating an operation of probe position changing mechanism 6C. Fig. 11 is a diagram for illustrating a state of rotation of a rotated spherical body.

The probe position changing mechanism is structured as shown in Figs. 7 to 10 and spherical body 21 is held by a first cone 101a and a second cone 101b which are identical in shape to each other on left and right sides and a drive roller 105. Spherical body 21 is rotated by rotating drive roller 105, and first cone 101a and second cone 101b follow that rotation. The probe position changing mechanism is a mechanism which rotates once also eccentric members 104a and 104b included in a varying portion 104 as a result of one rotation of spherical body 21 by drive roller 105. An eccentric gear can be employed as an eccentric member by way of example. As the eccentric gear provides speeds different between the left and right sides (being different in phase by 180 degrees) to spherical body 21, a rotation axis of the spherical body which is rotated by drive roller 105 is varied and a track viewed from one certain point rotates as drawing a meridian of the globe (Fig. 11).

Referring to Figs. 7 and 8, focused ultrasonic probe 4 is fixed in water in water tank 2. Probe position changing mechanism 6C is a mechanism which rotates spherical body 21 simultaneously in a first direction R3 and a direction R4 intersecting with the first direction such that burst waves are incident on the entire surface of spherical body 21. Probe position changing mechanism 6C includes first cone 101a, second cone 101b, a pressing mechanism (a base portion 103), and varying portion 104.

First cone 101a is configured to rotate around a first rotation axis 115a and has a conical surface in contact with spherical body 21 to be rotated at a first contact of spherical body 21 from a first direction along first rotation axis 115a. Second cone 101b is configured to rotate around a second rotation axis 115b in parallel to first rotation axis 115a and has a conical surface in contact at a second contact different from the first contact of spherical body 21 in the first direction. The pressing mechanism (base portion 103) relatively presses first cone 101a and second cone 101b against spherical body 21 in the first direction. Varying portion 104 varies a rotation speed of second cone 101b relatively to a rotation speed of first cone 101a.

Since first cone 101a and second cone 101b are in contact with spherical body 21 from above, rotation shafts 102a and 102b, base portion 103, and varying portion 104 (mainly base portion 103) function as weights. Rotation shafts 102a and 102b, base portion 103, and varying portion 104 function as a pressing mechanism which presses first cone 101a and second cone 101b against spherical body 21. Consequently, first cone 101a and second cone 101b are pressed in a direction shown with an arrow 118 in Fig. 8 (toward spherical body 21). A member different from rotation shafts 102a and 102b, base portion 103, and varying portion 104 described above, such as a spring or a weight, may be arranged as a pressing mechanism.

Probe position changing mechanism 6C may include an auxiliary roller 106 for supporting spherical body 21 as shown in Fig. 7. Auxiliary roller 106 may be arranged on opposing sides of spherical body 21 with first cone 101a and second cone 101b being interposed as shown in Fig. 7, or a single auxiliary roller 106 alone may be arranged. For example, auxiliary roller 106 is preferably arranged in the rear of spherical body 21 in a direction along a direction of rotation (a direction shown with an arrow 113 in Fig. 2) of drive roller 105.

Varying portion 104 varies a rotation speed of second rotation shaft 102b relatively to a rotation speed of first rotation shaft 102a. Varying portion 104 may include a first eccentric member 104a connected to first rotation shaft 102a and a second eccentric member 104b connected to second rotation shaft 102b.

As shown in Fig. 9, a rotation shaft center 115 which is the center of first rotation shaft 102a and a pitch circle center 116 which is the center of a pitch circle 117 in eccentric member 104a are arranged at positions distant from each other by an amount of eccentricity e. Eccentric member 104b is connected to second rotation shaft 102b of second cone 101b also as being eccentric by similar amount of eccentricity e.

Eccentric member 104a connected to first rotation shaft 102a and the eccentric member connected to second rotation shaft 102b are arranged to be engaged with each other, and first rotation shaft 102a and second rotation shaft 102b rotate in coordination with the eccentric members being interposed.

In this case, first eccentric member 104a and second eccentric member 104b also rotate with rotation of first rotation shaft 102a and second rotation shaft 102b. With rotation, a distance from a position of a portion of contact between first eccentric member 104a and second eccentric member 104b to first rotation shaft 102a and second rotation shaft 102b is varied. With such variation in distance, the rotation speed of first rotation shaft 102a (first cone 101a) is different from the rotation speed of second rotation shaft 102b (second cone 101b). With rotation of first rotation shaft 102a and second rotation shaft 102b, owing to a function of the eccentric member, each of rotation speeds of first rotation shaft 102a and second rotation shaft 102b repetitively becomes higher or lower than a certain constant speed. A rotation speed of first rotation shaft 102a repetitively becomes relatively higher or lower than a rotation speed of second rotation shaft 102b.

Any construction can be adopted for the eccentric member connected to first rotation shaft 102a and second rotation shaft 102b. Though Fig. 8 shows an example in which first eccentric member 104a and the second eccentric member are implemented by eccentric gears engaged with each other, for example, first eccentric member 104a and second eccentric member 104b may be implemented by friction wheels which are rotatably arranged while they are in contact between first rotation shaft 102a and second rotation shaft 102b.

In rotating spherical body 21, one rotation of spherical body 21 is preferably in synchronization with one rotation of first cone 101a and second cone 101b. To that end, first cone 101a and second cone 101b are shaped and arranged as shown in Fig. 10.

As shown in Fig. 10, an angle formed between a line segment from a center 21a of spherical body 21 to a portion of contact of first cone 101a with spherical body 21 and a horizontal is set to 45°. Since line segments marked with a circle in Fig. 10 are equal to each other in length, a diameter of a circle which represents a track of a portion in contact with spherical body 21 (ball) while first cone 101a makes one turn (twice a distance from rotation axis 115a in Fig. 10 to the contact portion) is half a distance a between the rotation axes. This relation is also applicable to second cone 101b.

Since first cone 101a and second cone 101b in contact with spherical body 21 in such relation are different from each other in rotation speed, the rotation axis of spherical body 21 can be inclined by a pitch angle $\alpha$ per one rotation. Consequently, spherical body 21 can be rotated, for example, such that the entire outer circumferential surface of spherical body 21 passes without fail as shown in Fig. 11 through a region where burst waves from ultrasonic probe 4 are incident as in Fig. 7.

The shape of first cone 101a and second cone 101b is not limited to the shape as shown in Figs. 7 and 8, and may be another shape so long as the cone has a conical side surface (a side surface in contact with spherical body 21).

The nondestructive inspection apparatus according to the first and second embodiments above can use harmonic surface waves which propagate through a surface layer of a spherical body such as a ceramic ball to detect and visualize a closed crack or a metal inclusion at a depth of approximately one severalth of a harmonic wavelength. As shown in Fig. 3, only when a closed crack or a metal inclusion is present in a region having a certain width around the equator of a ball, scattered waves therefrom are detected.

By using surface waves as shown in Figs. 2 and 3, a closed crack or a metal inclusion present in a region having a certain width around the equator of a ball can be detected without scanning in a direction of a meridian. A region in a band form around 360 degrees in Fig. 3 is inspected by rotating the ball around a vertical axis once in this state. Thereafter, the region in the band form is inspected around 360 degrees similarly by rotating the spherical body by a certain angle around an axis perpendicular to a sheet surface and again rotating the spherical body once around the vertical axis. The entire spherical surface can be inspected by repeating this step a necessary number of times.

A crack having a length of approximately 10% of a focused beam diameter of an ultrasonic probe can be detected by receiving back scattered waves instead of surface waves from a closed crack or a metal inclusion.

Reception sensitivity can be enhanced by 10 to 20 dB by using a transmission probe and a reception probe as shown in Fig. 4 instead of the back scattered wave method with the use of a single probe. By using a transmission probe and a reception probe, a closed crack of which length direction is oblique to a direction of propagation of surface waves, longitudinal waves, or transverse waves can be detected by rotating a ceramic ball once around a vertical axis.

<Inspection Method>

A method of inspecting a spherical body using the inspection apparatus described above will be described. Fig. 12 is a flowchart for illustrating the inspection method according to the present embodiment. The inspection method according to the present embodiment will be described with reference to Fig. 12.

As shown in Fig. 12, in the inspection method according to the present embodiment, initially, a preparation step (S1) is performed. Specifically, in the step (S1), spherical body 21 to be inspected is prepared. In the step (S1), the inspection apparatus shown in Fig. 6 or 7 including probe position changing mechanism 6B or 6C for performing the rotation method described above is prepared.

Then, an inspection step (S2) is performed. Specifically, spherical body 21 to be inspected is set on probe position changing mechanism 6B or 6C of the inspection apparatus. Spherical body 21 is inspected with inspection apparatus main body 10 and ultrasonic probe 4 in Fig. 1 while spherical body 21 is rotated in probe position changing mechanism 6B or 6C. The spherical body can thus be inspected.

<Method of Manufacturing Bearing>

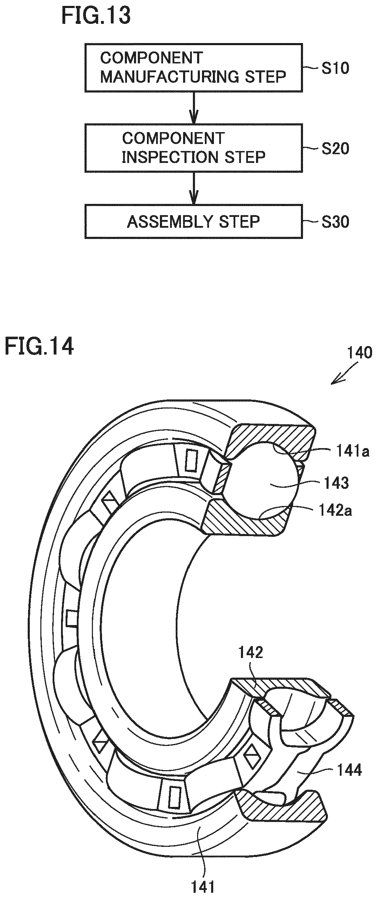

Fig. 13 is a flowchart for illustrating a method of manufacturing a bearing according to the present embodiment. The method of manufacturing a bearing according to the present embodiment is a method of manufacturing a bearing inspected with the inspection method described above. Initially, a component manufacturing step (S10) is performed. In this step (S10), components constituting a bearing such as a ball (rolling element) of the bearing representing a spherical body, an inner ring, an outer ring, and a cage are manufactured. Any conventionally well-known method can be employed as the method of manufacturing these components.

Then, a component inspection step (S20) is performed. In this step (S20), the ball (rolling element) is inspected with the inspection method described above. By inspecting the ball while the ball is rotated with the rotation method according to the present embodiment as described above, the entire circumference of the ball can thoroughly be inspected. Other components (the inner ring, the outer ring, and the cage) may also be inspected with a conventionally well-known inspection method.

Then, an assembly step (S30) is performed. In this step (S30), a bearing is manufactured by assembling the ball which has passed the inspection in the step (S20) described above and other components. A conventionally well-known method can be used for the step of assembling a bearing. A bearing according to the present embodiment can thus be manufactured.

<Construction of Bearing>

Fig. 14 is a diagram showing one example of a bearing 140 manufactured with the manufacturing method according to the present embodiment. Bearing 140 is a ball bearing such as a bearing rotatably supporting a rotation shaft of transportation equipment axially on a member such as a housing arranged as being opposed to an outer circumferential surface of the rotation shaft, and it is for example, a deep-groove ball bearing.

Referring to Fig. 14, bearing 140 includes an outer ring 141 having an outer ring rolling contact surface 141a on an inner circumferential surface, an inner ring 142 having an inner ring rolling contact surface 142a on an outer circumferential surface, a plurality of rolling elements 143, and a cage 144. Inner ring 142 is arranged on an inner side of outer ring 141 such that inner ring rolling contact surface 142a is opposed to outer ring rolling contact surface 141a of outer ring 141.

Outer ring 141 and inner ring 142 are made, for example, of steel. For example, high carbon-chromium bearing steel such as SUJ2 under JIS standards, alloyed steel for machine structural use such as SCM420, or carbon steel for machine structural use such as S53C can be employed as a material for outer ring 141 and inner ring 142.

Rolling element 143 can be made of any material such as steel or ceramics, and for example, it is a ball made of ceramics composed of Si3N4 (silicon nitride). Rolling element 143 comes in contact with outer ring rolling contact surface 141a and inner ring rolling contact surface 142a and a plurality of rolling elements are arranged as being aligned on an annular raceway along a circumferential direction of outer ring rolling contact surface 141a and inner ring rolling contact surface 142a. Cage 144 is composed, for example, of a polyamide resin such as nylon and holds rolling elements 143 at a prescribed pitch in the circumferential direction.

Such a bearing 140 is manufactured with the method of manufacturing a bearing according to the present embodiment described above. Therefore, the entire circumference of rolling element 143 has been inspected and high durability has been ensured.

[Exemplary Visualization of Defect]

(Exemplary Visualization 1)

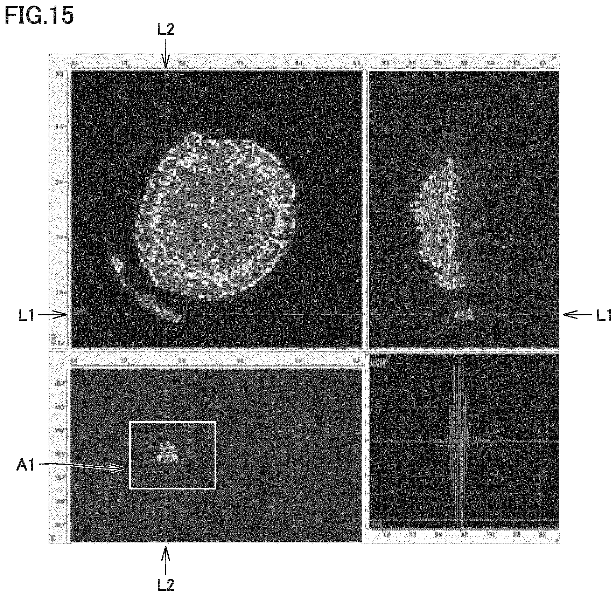

Fig. 15 is a diagram showing exemplary visualization of a closed crack in a silicon nitride ball in horizontal plane scanning. Fig. 15 shows an image obtained by horizontal plane scanning by the ultrasonic probe described with reference to Fig. 5. An image in upper left in Fig. 5 shows a harmonic plan view of a closed crack in the vicinity of a surface of the silicon nitride ball, an image in lower left in Fig. 5 shows a cross-sectional view along an arrow L1 in the plan view, and an image in upper right in Fig. 5 shows a lateral cross-sectional view along an arrow L2 in the plan view. A closed crack is shown in a white frame shown with an arrow A1. A general three-dimensional position of a closed crack can thus be known.

(Exemplary Visualization 2)

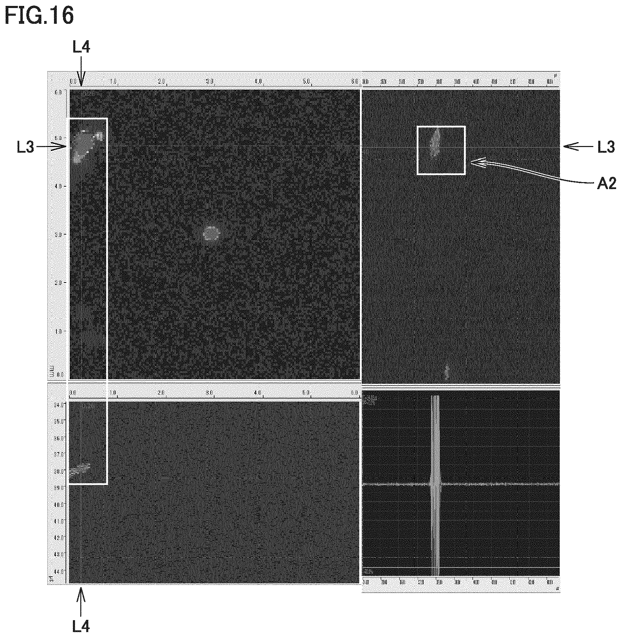

Fig. 16 is a diagram showing exemplary visualization of a metal inclusion in a silicon nitride ball in horizontal plane scanning. Fig. 16 shows an image obtained by horizontal plane scanning by the ultrasonic probe described with reference to Fig. 5. An image in upper left in Fig. 16 shows a harmonic plan view of a metal inclusion in the vicinity of a surface of the silicon nitride ball, an image in lower left in Fig. 16 shows a cross-sectional view along an arrow L3 in the plan view, and an image in lower right in Fig. 16 shows a lateral cross-sectional view along an arrow L4 in the plan view. A general three-dimensional position of a metal inclusion is shown in a white frame shown with an arrow A2.

(Exemplary Visualization 3)

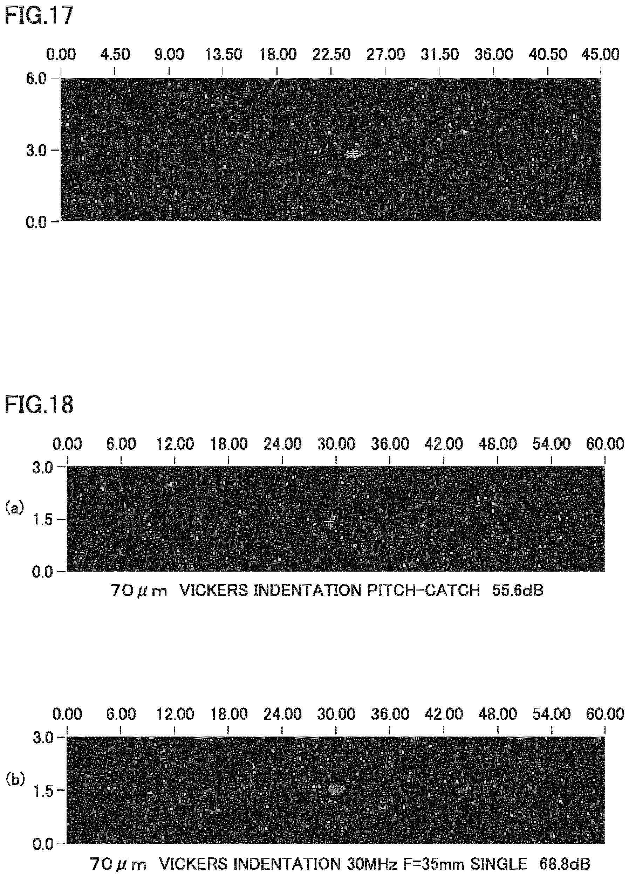

Fig. 17 is a diagram showing exemplary visualization of a closed crack in a silicon nitride ball through rotation of the ball around a vertical axis. Fig. 17 shows a developed view in a circumferential direction of a closed crack present around the equator, which is obtained by rotating the silicon nitride ball described with reference to Fig. 6 around a vertical axis.

(Exemplary Visualization 4)

Fig. 18 is a diagram showing exemplary visualization of a simulated defect (a Vickers indentation) in a silicon nitride ball in horizontal plane scanning. Fig. 18 shows a developed view in a circumferential direction of a simulated defect (a Vickers indentation) present around the equator, which is obtained by rotating a silicon nitride ball described with reference to Fig. 6 around a vertical axis. Fig. 18 (a) shows an image created from data obtained with the two-probe pitch-catch method and Fig. 18(b) shows an image created from data obtained with a single probe.

It can be seen that the two-probe pitch-catch method is higher in sensitivity than a single probe method because it can visualize an indentation with a gain lower than a gain in the single probe method. In the field of ultrasonic nondestructive inspection, the gain refers to an amplification factor in reception. Sensing with a lower gain is desirable. Environmental electromagnetic noise is included when a gain is high. Therefore, it is desirable that a signal high in SN ratio can be taken with a low gain.

A numeric value shown in Fig. 18 (a) and (b) represents a value for a gain adjusted such that reflection intensity is approximately 70% as high as a full scale. With a higher gain, an area of a reflection region is increased and a luminance is also enhanced. With a lower gain, opposite tendency is exhibited. A gain is adjusted as appropriate in order to obtain an easily viewable image.

It should be understood that the embodiments disclosed herein are illustrative and non-restrictive in every respect. The scope of the present invention is defined by the terms of the claims, rather than the description of the embodiments above, and is intended to include any modifications within the scope and meaning equivalent to the terms of the claims.

REFERENCE SIGNS LIST

1 nondestructive inspection apparatus; 2 water tank; 4, 4A, 4B ultrasonic probe; 6, 6A, 6B, 6C position changing mechanism; 8 display; 10 inspection apparatus main body; 11 synchronous operation portion; 12 signal output portion; 13 signal detection portion; 14 waveform recording portion; 15 waveform processing portion; 16 imaging portion; 21 spherical body; 21a center; 32 ultrasonic signal generator; 34 burst wave generation apparatus; 36, 42 amplifier; 48 A/D conversion portion; 52 turntable; 54 scanning mechanism; 56 holder; 101a first cone; 101b second cone; 102a rotation shaft; 115a rotation axis; 103 base portion; 104 varying portion; 104a, 104b eccentric member; 105 drive roller; 106 auxiliary roller; 115 rotation shaft center; 116 pitch circle center; 117 pitch circle; 140 bearing; 141 outer ring; 141a outer ring rolling contact surface; 142 inner ring; 142a inner ring rolling contact surface; 143 rolling element; and 44 cage

**Claims**

1.  A nondestructive inspection apparatus comprising:

    an ultrasonic probe configured to transmit burst waves to a surface of a spherical body in water;
    a signal output portion configured to output the burst waves to the ultrasonic probe;
    a probe position changing mechanism configured to rotate the spherical body arranged in water so as to change an incident position of the burst waves on the spherical body; and
    a signal detection portion configured to detect a harmonic waveform generated when a closed crack or a metal inclusion oscillates by waves excited in the spherical body by the burst waves through mode conversion.

2.  The nondestructive inspection apparatus according to claim 1, wherein
    the ultrasonic probe also serves as a reception probe.

3.  The nondestructive inspection apparatus according to claim 1, wherein
    the ultrasonic probe includes a transmission probe and a reception probe, the reception probe being allocatable at a position different from a position where the transmission probe is located.

4.  The nondestructive inspection apparatus according to any one of claims 1 to 3, wherein
    the signal detection portion includes a filter configured to remove a fundamental wave component from a signal received by the ultrasonic probe and extract the harmonic waveform.

5.  The nondestructive inspection apparatus according to any one of claims 1 to 4, wherein
    the ultrasonic probe is fixed in water,

the probe position changing mechanism is a mechanism configured to rotate the spherical body simultaneously in a first direction and a direction intersecting with the first direction such that the burst waves are incident on an entire surface of the spherical body, and
the probe position changing mechanism includes

    a first cone configured to rotate around a first rotation axis, the first cone having a conical surface in contact with the spherical body to be rotated at a first contact of the spherical body from a first direction along the first rotation axis,
    a second cone configured to rotate around a second rotation axis in parallel to the first rotation axis, the second cone having a conical surface in contact at a second contact different from the first contact of the spherical body in the first direction,
    a pressing mechanism configured to relatively press the first cone and the second cone against the spherical body in the first direction, and
    a varying portion configured to vary a rotation speed of the second cone relatively to a rotation speed of the first cone.

6.  The nondestructive inspection apparatus according to any one of claims 1 to 5, further comprising:

    a storage portion configured to store the incident position of the burst waves on the spherical body and a detection result of the signal detection portion in association with each other, the incident position being changed by the probe position changing mechanism; and
    an imaging portion configured to read the incident position and the detection result stored in the storage portion and create an image showing a position on the spherical body of the closed crack or the metal inclusion.

7.  The nondestructive inspection apparatus according to any one of claims 1 to 6, wherein
    the spherical body is a rolling element for a bearing made of a non-magnetic material or a magnetic material.

8.  A method of manufacturing a bearing comprising:
    an inspection step of inspecting the spherical body with the nondestructive inspection apparatus according to claim 7.

FIG.1

WATER TANK

SYNCHRONOUS
SCANNING PORTION
11

PROBE
POSITION
CHANGING
MECHANISM
6

12

ULTRASONIC
SIGNAL
GENERATOR
32

BURST WAVE
GENERATION
APPARATUS
34

AMPLIFIER
36

SIGNAL OUTPUT PORTION

ULTRASONIC
PROBE
4

21

A/D
CONVERSION
PORTION
48

HPF
/BPF
46

LPF
44

AMPLIFIER
42

SIGNAL DETECTION PORTION

13

2

WAVEFORM
RECORDING
PORTION
14

WAVEFORM
PROCESSING
PORTION
15

IMAGING
PORTION
16

DISPLAY
8

INSPECTION APPARATUS
MAIN BODY

1

10

11

FIG.2

FIG.3

FIG.4

21

4A

4

4B

FIG.5

6A

4

21

2

10A

INSPECTION
APPARATUS
MAIN BODY

FIG.6

(A)

21

4

(B)

56  21  4

INSPECTION
APPARATUS
MAIN BODY

10B

52  54

6B

2

FIG.7

FIG.8

**FIG.9**

**FIG.10**

## FIG.11

ECCENTRICITY
E=0.45mm

PITCH ANGLE $\alpha$ =11.092°
PITCH p=0.9989mm

## FIG.12

PREPARATION STEP — S1

INSPECTION STEP — S2

## FIG.13

```
┌─────────────────────────┐
│ COMPONENT               │
│ MANUFACTURING STEP      │── S10
└─────────────────────────┘
            │
            ▼
┌─────────────────────────┐
│ COMPONENT               │
│ INSPECTION STEP         │── S20
└─────────────────────────┘
            │
            ▼
┌─────────────────────────┐
│ ASSEMBLY STEP           │── S30
└─────────────────────────┘
```

## FIG.14

## FIG.15

FIG.16

# FIG.17

# FIG.18

(a)

70 $\mu$ m  VICKERS INDENTATION PITCH-CATCH  55.6dB

(b)

70 $\mu$ m  VICKERS INDENTATION 30MHz F=35mm SINGLE  68.8dB

## INTERNATIONAL SEARCH REPORT

| International application No. |
| --- |
| PCT/JP2016/079264 |

A. CLASSIFICATION OF SUBJECT MATTER
*G01N29/04*(2006.01)i, *G01N29/24*(2006.01)i, *G01N29/27*(2006.01)i

According to International Patent Classification (IPC) or to both national classification and IPC

B. FIELDS SEARCHED

Minimum documentation searched (classification system followed by classification symbols)
G01N29/00-G01N29/52, G01B17/00-G01B17/08

Documentation searched other than minimum documentation to the extent that such documents are included in the fields searched
Jitsuyo Shinan Koho          1922-1996   Jitsuyo Shinan Toroku Koho   1996-2016
Kokai Jitsuyo Shinan Koho    1971-2016   Toroku Jitsuyo Shinan Koho   1994-2016

Electronic data base consulted during the international search (name of data base and, where practicable, search terms used)
JSTPlus(JDreamIII)

C. DOCUMENTS CONSIDERED TO BE RELEVANT

| Category* | Citation of document, with indication, where appropriate, of the relevant passages | Relevant to claim No. |
| --- | --- | --- |
| Y | JP 2006-64574 A  (Yugen Kaisha Choonpa Zairyo Shindan Kenkyusho), 09 March 2006 (09.03.2006), fig. 3 (Family: none) | 1-8 |
| Y | JP 63-243751 A  (NGK Insulators, Ltd.), 11 October 1988 (11.10.1988), fig. 3 & US 5005417 A fig. 3 | 1-8 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 29 November 2016 (29.11.16) | 13 December 2016 (13.12.16) |

| Name and mailing address of the ISA/ Japan Patent Office 3-4-3,Kasumigaseki,Chiyoda-ku, Tokyo 100-8915,Japan | Authorized officer |
| --- | --- |
| | Telephone No. |

Form PCT/ISA/210 (second sheet) (January 2015)

## REFERENCES CITED IN THE DESCRIPTION

**Patent documents cited in the description**

- JP 2006064574 A

**Non-patent literature cited in the description**

- Cho-onpa Tanshouhou. Nikkan Kogyo Shimbun, Ltd, 10 January 1979